Europäisches Patentamt

European Patent Office

Office européen des brevets

(19)

(11) Veröffentlichungsnummer: **0 167 037**
**B1**

(12)

# EUROPÄISCHE PATENTSCHRIFT

(45) Veröffentlichungstag der Patentschrift: **30.05.90**

(21) Anmeldenummer: **85107284.3**

(22) Anmeldetag: **13.06.85**

(51) Int. Cl.⁵: **H 05 B 7/06, F 27 D 11/10**

(54) **Badelektrode zu Pfannenofen.**

(30) Priorität: **06.07.84 CH 3274/84**

(43) Veröffentlichungstag der Anmeldung:
**08.01.86 Patentblatt 86/02**

(45) Bekanntmachung des Hinweises auf die
Patenterteilung:
**30.05.90 Patentblatt 90/22**

(84) Benannte Vertragsstaaten:
**AT BE CH DE FR GB IT LI SE**

(56) Entgegenhaltungen:
**CH-A- 452 730**
**DE-A-2 124 412**
**FR-A-2 292 397**
**GB-A-2 131 260**
**US-A-2 789 152**

(73) Patentinhaber: **BBC·Brown Boveri AG**
**Haselstrasse**
**CH-5401 Baden (CH)**

(72) Erfinder: **Bühler, Karl**
**Oberdorfstrasse 28**
**CH-5415 Nussbaumen (CH)**
Erfinder: **Menth, Anton, Dr.**
**Hombergsteig 5**
**CH-5415 Nussbaumen (CH)**

Courier Press, Leamington Spa, England.

**Beschreibung**

Bei der Erfindung wird ausgegangen von einem Verfahren zur Erhöhung der Betriebssicherheit eines Pfannenofens nach dem Oberbegriff des Patentanspruchs 1.

Mit diesem Oberbegriff nimmt die Erfindung auf einen Stand der Technik Bezug wie er beispielsweise aus der CH-Patentschrift 452 730 bekannt ist.

Bei Lichtbogenofen bzw. Pfannenofen ist die Boden- bzw. Badelektrode einer anhaltenden sehr hohen thermischen Beanspruchung ausgesetzt und wird vorwiegend mittels einer Flüssigkeitskühlung gekühlt. Insbesondere die in der Einschmelzphase bei Lichtbogenöfen resp. in der Aufheizphase bei Pfannenöfen entstehende Verlustwärme hat einen relativ grossen Wärmefluss in der Boden- bzw. Badelektrode in Richtung Ofengefäss- bzw. Pfannenboden zur Folge. Der unterschiedliche Wärmefluss in der Boden- bzw. der Badelektrode bedeutet bei konstanter Länge der Boden- bzw. der Badelektrode eine unterschiedliche Temperaturdifferenz zwischen deren gekühlter und mit der Schmelze in Berührung stehenden Zone. Bei noch grösserem Wärmeangebot ist aber keine höhere Temperaturdifferenz vorhanden, da die Elektrode auf der Innenseite nicht wärmer sein kann als die Schmelztemperatur. Oder anders ausgedrückt, es kann mehr Wärme nur dann transportiert werden, wenn die Elektrode kürzer wird, d.h. abschmilzt. Bei ungenügender Kühlung oder bei Wegfall der Kühlung ist die Betriebssicherheit des Ofenbetriebes nicht mehr vollständig gewährleistet, da die Elektrode in diesem Fall soweit abschmelzen könnte, dass die Gefahr eines Schmelzendurchbruches besteht. Bei Lichtbogenöfen kann eine forcierte Kühlung, beispielsweise eine Flüssigkeitskühlung der Bodenelektrode—da der Ofen stationär ist—kontinuierlich aufrechterhalten werden.

Bei Pfannenöfen hingegen ist—wegen des nichtstationären Betriebszustandes—die Kühlung der Badelektrode problematischer. In der Schmelzenaufheizstation an der Stranggiessemaschine, in der eventuell vorhandenen metallurgischen Behandlungsstation und beim Schmelzofen kann die Pfanne beständig an eine forcierte Fremdkühlung von aussen angeschlossen sein. Während des Transportes der Pfanne zu den einzelnen, oftmals geographisch weit auseinanderliegenden obenstehend aufgeführten Orten ist das Kühlen der Badelektrode aufwendig, da beispielsweise die für Kühlung erforderlichen Schläuche für die Zuführung und Abführung des Kühlmediums beständig mit der Pfanne mitgeführt werden müssten.

Aus der CH—A—452 730 ist ein elektrischer Ofen mit einer Bodenelektrodenanordnung bekannt, bei welchem zu Schutz der Elektrodenkörper gegen Übertemperaturen der Elektrodenkörper zwei strom- und wärmeleitend verbundene, hintereinander angeordnete Teile aufweist. Der der Schmelze zugewandte Teil des Elektrodenkörpers ist aus einem gleichen Material wie dasjenige der Schmelze, der andere von der Schmelze abgekehrte Teil besteht aus einem Strom- und Wärmeleiter und dient der Fortleitung und Abstrahlung der Wärme.

Bei Extrembedingungen ist vorgesehen, die nach aussen gekehrten Elektrodenteile durch Luft oder eine Kühlflüssigkeit zwangszukühlen.

Weil es sich bei dem bekannten Ofen um einen Lichtbogenofen handelt, ist dort das Problem der Elektrodenkühlung beim Transport des Ofengefässes nicht angesprochen.

Ausgehend vom Bekannten liegt der Erfindung die Aufgabe zugrunde, ein Verfahren zur Erhöhung der Betriebssicherheit der Pfanne eines Pfannenofens anzugeben, das es erlaubt, zumindest während der Manipulation der Pfanne ohne fremde Kühlung auszukommen.

Aufabge der Erfindung ist es ferner, eine Vorrichtung zur Durchführung des Verfahrens anzugeben.

Die Lösung dieser Aufgaben erfolgt durch die in den Patentansprüchen gekennzeichnete Erfindung.

Der wesentliche Vorteil der Erfindung besteht darin, dass ein Transport der Pfanne ohne Zu- und Abführleitungen für ein Kühlemedium einer Fremdkühlung erreicht ist. Darüber hinaus ergibt sich eine Verminderung des Verzundern des elektrischen Kontaktflächen, da eine vorgebbare kritische Temperatur nicht überschritten wird.

Die Dimensionierung der Badelektrode aufgrund der Formel gemäss Anspruch 2 ermöglicht eine exakte Vorausberechnung hinsichtlich der gewünschten Manipulationszeit ohne Fremdkühlung.

Ein Vorteil der Ausgestaltung gemäss Anspruch 3 ist darin zu sehen, dass die Lösung der vorstehend genannten Aufgabe mit einfachen konstruktiven Mitteln ermöglicht wird.

Die Lösung nach Anspruch 4 erlaubt eine einstückige Herstellung der Badelektrode und es sind keine zusätzlichen konstruktiven Verbindungsmittel erforderlich.

Durch die Weiterbildung des Erfindungsgegenstandes gemäss Anspruch 5 kann erreicht werden, dass beim Auswechseln der verbrauchten Badelektrode der Kühlkörper wiederverwendbar ist.

Die auswechselbare Verbindung der Kühlkörper mit der Badelektrode nach Anspruch 5 ermöglicht einen Austausch kalter Kühlkörper gegen bereits schon erwärmte. Dadurch kann die Verweilzeit der Pfanne ohne Fremdkühlung gesteigert werden. Dabei können die Kühlkörper durch eine hydraulische Vorrichtung an die Badelektrode angepresst werden. Ebenso ist es denkbar, die Kühlkörper an die Badelektrode durch Verklemmung oder durch Verschraubung zu befestigen.

Gemäss der Ausbildung des Kühlkörpers als elektrisches Anschlussstück nach Anspruch 6 werden zwei Funktionen in einem Teil vereinigt.

Ein Vorteil der Ausgestaltung gemäss Anspruch 7 ist darin zu sehen, dass bei Verwendung von Salzen die bei vorgegebenen Temperaturen schmelzen, dem Kühlkörper Wärme für den Schmelzvorgang entzogen und somit ein Kühleffekt ohne Temperaturanstieg erreicht wird.

Durch Verwendung von Kühlkörpern mit einer relativ hohen Wärmeleitfähigkeit entsprechend Anspruch 8 wird eine gute Wärmeabführung aus der Badelektrode erzielt.

Durch Ausbildung der Kühlkörpern gemäss Anspruch 9 kann die Veränderung der Lage der Schmelzgrenze fest/flüssig an der Stirnfläche der Elektrode klein gehalten und der Temperaturanstieg an der Kühfläche A zusätzlich verzögert werden.

Die Erfindung wird nachstehend anhand von in der Zeichnung dargestellten Ausführungsbeispielen näher erläutert:

Es zeigt:

Fig. 1 einen schematischen verikalen Schnitt durch eine Pfanne eines Pfannenofens,

Fig. 2a einen teilweisen Vertikalschnitt durch den Pfannenboden im Badelektrodenbereich in einer ersten erfindungsgemässen Ausführungsart,

Fig. 2b ein Temperatur-Längendiagramm entsprechend Fig. 2a,

Fig. 3a einen teilweisen Vertikalschnitt durch den Pfannenboden im Badelektrodenbereich in einer zweiten erfindungsgemässen Ausführungsart,

Fig. 3b ein Temperatur-Längendiagramm entsprechend Fig. 3a,

Fig. 4 ein Temperaturdifferenz-Zeitdiagramm entsprechend Fig. 2a und 3a,

Fig. 5 ein schematisches Temperatur-Zeit-Diagramm für Beginn und Ende des Abkoppelns der Fremdkühlung,

Fig. 6a eine erste erfindungsgemässe beispielsweise Ausführungsart einer Badelektrode mit einem Kühlkörper wobei sich die Badelektrode zur Herdfläche hin verjüngt,

Fig. 6b ein Temperatur-Längendiagramm entsprechend Fig. 6a,

Fig. 7 eine zweite erfindungsgemässe beispielsweise Ausführungsart einer Badelektrode mit einem Kühlkörper,

Fig. 8 eine dritte erfindungsgemässe beispielsweise Ausführungsart einer Badelektrode mit einem Kühlkörper, wobei sich der elektrisch leitende Querschnitt der Badelektrode zur Herdfläche hin verjüngt und der Durchmesser zur Herdfläche hin zunimmt,

Fig. 9 eine vierte erfindungsgemässe beispielsweise Ausführungsart einer Badelektrode mit einem Kühlkörper, wobei der Kühlkörper zugleich elektrisches Anschlussstück bildet, fremdgekühlt ist und mit beispielsweise Salz gefüllten Kühlkammern versehen ist.

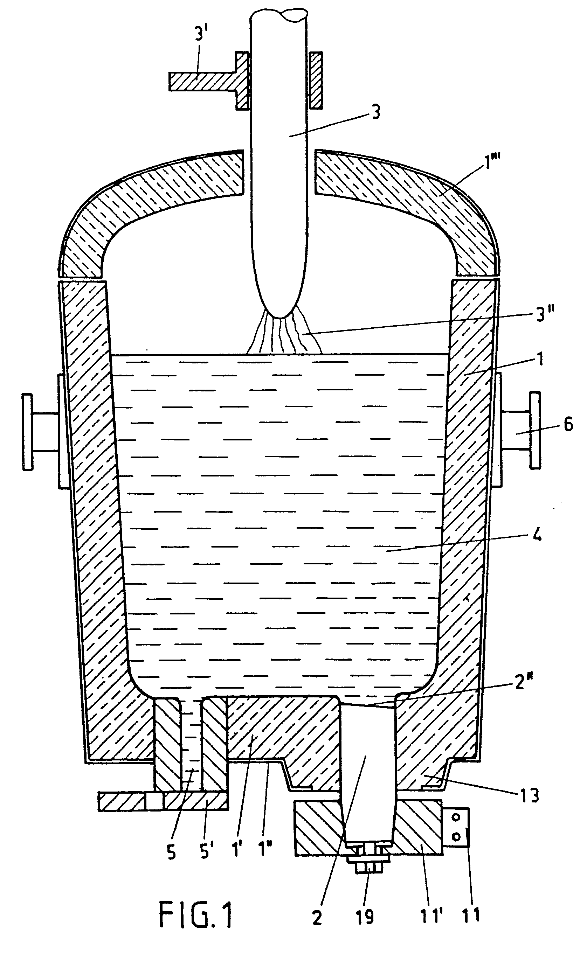

In Fig. 1 ist in schematischer Darstellung ein Pfannenofen dargestellt. Alle nicht zum unmittelbaren Verständnis der Erfindung dienenden Teile wurden weggelassen. Dieser Pfannenofen besteht im wesentlichen aus einer Pfanne 1, mit einer feuerfesten Auskleidung 1', einem Deckel 1''' durch welchen in einer Öffnung eine Leistungselektrode 3 hindurchragt. Im Pfannenboden 1', 1'' des Pfannenofens ist eine Badelektrode 2, 2'' angeordnet, an deren unterem Ende ein Kühlkörper 11 mittels einer Schräube 19 an der Badelektrode 2, 2'' befestigt ist. Mit 2 ist der feste Teil der Badelektrode und mit 2'' deren flüssiger Teil bezeichnet. Im Ausführungsbeispiel gemäss Fig. 1 dient der Kühlkörper 11 gleichzeitig zum elektrischen Anschluss der Badelektrode 2, 2'' und ist demzufolge mit einer elektrischen Anschlussplatte 11' versehen. Im Pfannenboden 1', 1'' ist weiterhin ein Bodenabstichloch 5 für den Abstich der Schmelze 4 vorgesehen, wobei mittels einer Verschlussplatte 5' das Bodenabstichloch 5 geöffnet bzw. verschlossen werden kann. Die Leistungselektrode 3 wird durch den Elektrodentragarm 3' gehalten. Zwischen der Spitze der Leistungselektrode 3 und der Oberfläche der Schmelze 4 ist ein Lichtbogen 3'' ausgebildet. Wie in Fig. 1 klar ersichtlich ist, ist der Pfannenboden 1', 1'' mit einer Ausbuchtung 13 versehen, die die Badelektrode 2, 2'' allseits umgibt. Der Transport der Pfanne 1, beispielsweise mittels eines Kranes erfolgt mittels der kippbaren Aufhängung 6.

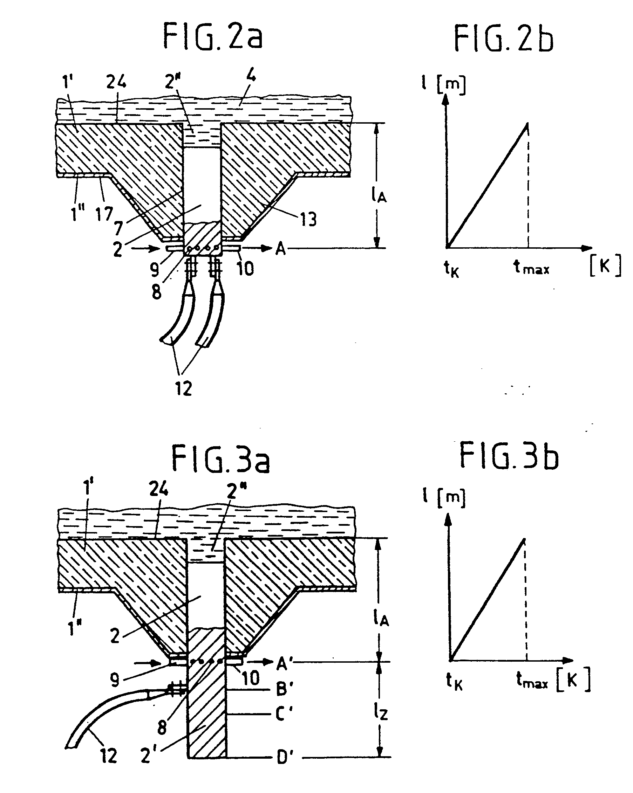

Fig. 2a zeigt die Badelektrode 2, 2'', welche sich in einer Öffnung 7 des Pfannenbodens 1', 1'' befindet und die die Badelektrode 2, 2'' umgebende Ausbuchtung 13 im Pfannenboden 1', 1''. In der Fläche 17 der Badelektrode 2, 2'', welche mit Pfeilen gekennzeichnet ist, ist eine Flüssigkeitskühlung vorgesehen, die im wesentlichen aus Kühlkanälen, einem Flüssigkeitszuführungsrohr 9 und einem Flüssigkeitsabführungsrohr 10 besteht.

An ihrer unteren Stirnfläche ist die Badelektrode 2, 2'' an die elektrischen Anschlusskabel 12 angeschlossen.

Mit $l_A$ ist die Gesamtlänge der Badelektrode 2, 2'' von der Herdfläche 24 bis zur Kühlfläche A bezeichnet.

In Fig. 2b ist der Temperaturverlauf innerhalb der Badelektrode 2, 2'' von der Kühlfläche A bis zur Herdfläche 24, während der Zeit der angekoppelten Kühlung bis zum Beginn der Abkoppelung, dargestellt. $t_K$ bezeichnet die Temperatur der Badelektrode 2, 2' in der Kühlfläche A und $t_{max}$ die Temperatur der Badelektrode 2, 2'' in der Herdfläche 24. In der Ausführungsart der Badelektrode 2, 2'' gemäss Fig. 2a vollzieht sich der Temperaturverlauf innerhalb der Elektrode 2, 2'' linear.

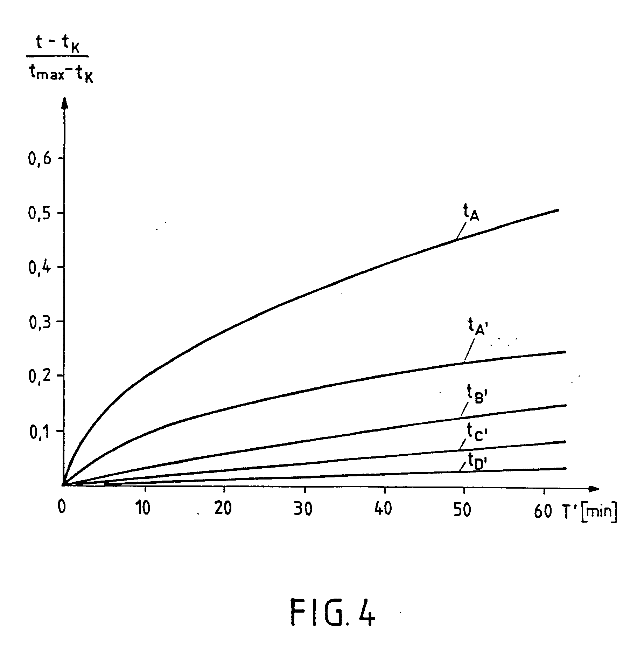

Fig. 3a zeigt eine Badelektrode 2, 2'', welche eine Verlängerung 2' über deren Kühlfläche A' hinaus, aufweist. $l_A$ bezeichnet wiederum die Länge des Teils der Badelektrode 2, 2'' von der Herdfläche 24 bis zur Kühlfläche A' und $l_z$ die Länge des verlängerten Teiles 2' der Badelektrode 2, 2''. In diesem verlängerten Teil sind unterschiedliche Elektrodenflächen mit B', C' und D' bezeichnet. Auf diese Elektrodenflächen wird in Fig. 4 näher Bezug genommen. Das elektrische Anschlusskabel 12 ist seitlich im verlängerten Teil 2' der Badelektrode 2, 2'' angebracht.

Fig. 3b zeigt den gleichen linearen Temperaturverlauf wie er in Fig. 2b dargestellt und beschrieben

3

wurde für die Badelektrode nach Fig. 3a.

Im Diagramm gemäss Fig. 4 ist auf der Ordinate das Verhältnis der Temperaturdifferenz zwischen der Temperatur t zur Zeit T' nach Beginn der Abkopplung und der Temperatur $t_K$ bei Beginn der Abkopplung in der Kühlfläche A, A' zur Temperaturdifferenz zwischen der maximalen Temperatur $t_{max}$ in der Herdfläche und der Temperatur $t_K$ bei Beginn der Abkopplung A, A' angegeben. Auf der Abszisse ist die Zeit T' in Minuten angegeben.

Die Kurve $t_A$ zeigt für eine Badelektrode 2, 2'' aus Eisenwerkstoff den zeitlichen Verlauf der Temperatur in der Kühlfläche A nach Unterbrechen der Fremdkühlung, im vorliegenden Fall einer Flüssigkeitskühlung gemäss Fig. 2a, für eine 0,5 m lange Badelektrode 2, 2''. Die Kurve $t_A$', zeigt für eine Badelektrode 2, 2'' gemäss Fig. 2a aus Eisenwerkstoff den zeitlichen Verlauf der Temperatur in der Kühlfläche A nach Unterbrechung der Fremdkühlung, für eine 1 m lange Elektrode. Mit der Verlängerung von 0,5 m auf 1,0 m wird erreicht, dass beispielsweise für ein Verhältnis der Temperaturdifferenzen von 0,2, d.h. einem Faktor mit hoher einer, bei entsprechend konstruktiver Gestaltung genügenden Betriebssicherheit, die Verweilzeit der Badelektrode 2, 2'' der Pfanne 1 ohne Fremdkühlung von 10 Minuten auf 40 Minuten erhöht werden kann.

Die Dicke der feuerfesten Auskleidung 1' des Pfannenbodens 1'' bei einer neu zugestellten Pfanne 1 beträgt normalerweise 30 bis 40 cm, je nach Pfannengrösse verschleisst die feuerfeste Auskleidung während des Betriebszustandes und deren Dicke beträgt beispielsweise nach einer bestimmten Betriebsdauer nur noch 20 bis 30 cm. Die Badelektrode 2, 2' muss selbstverständlich für den Fall ausgelegt sein, dass sie auch bei einer stark verschlissenen feuerfesten Auskleidung 1' des Pfannenbodens 1 mit hoher Betriebssicherheit über einen relativ langen Zeitraum ohne Fremdkühlung auskommen kann. Dies wird erreicht, indem man den Pfannenboden 1', 1'' mit einer Ausbuchtung 13 versieht. Durch diese konstruktive Massnahme kann die Länge der Badelektrode 2, 2'' vom Pfannenherd 24 bis zur Kühlfläche A ebenfalls vergrössert werden. Unter gleichen Temperaturbedingungen und bei einer Gewähr ausreichender Betriebssicherheit gilt, dass die Verweilzeit der Badelektrode 2, 2'' der Pfanne 1 ohne Fremdkühlung proportional dem Quadrat der Länge der Badelektrode 2, 2'' ist.

Noch bessere Verweilzeiten ohne Fremdkühlung wurden erreicht, indem die Badelektrode über deren Kühlfläche hinaus verlängert wird. Gemäss den Kurven $t_A$', $t_B$', $t_C$' und $t_D$' in Fig. 4, welche den Flächen A', B', C' und D' in Fig. 3a einen beispielsweise 0,5 m ($l_A$) plus 0,5 m ($l_2$) langen Elektrode entsprechen, wird die Betriebssicherheit der Badelektrode 2, 2'' ohne Fremdkühlung erhöht. Dies drückt sich in einer Senkung des Ordinatenverhältnisses der Temperaturdifferenzen bei einer vorgegebenen Verweildauer der Badelektrode 2, 2'' der Pfanne 1, aus.

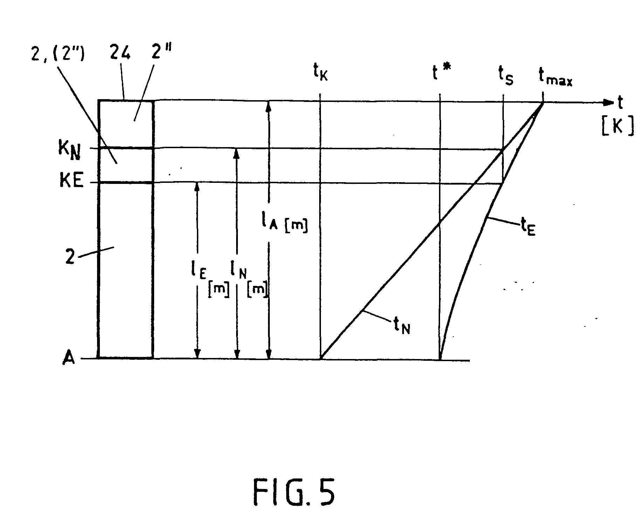

In Fig. 5 ist eine Badelektrode 2, 2'' und die Temperaturverhältnisse über deren axiale Länge vom Pfannenherd 24 bis zur Kühlfläche A dargestellt, und zwar vom Beginn der Abkopplung der Fremdkühlung bis zum Ende der Abkopplung. 2 bezeichnet den festen Teil der Elektrode, 2'' den flüssigen Teil. $k_A$ ist die Stirnfläche des festen Teils der Elektrode 2 bei Beginn der Abkopplung der Fremdkühlung, $k_E$ ist die Stirnfläche des festen Teils der Elektrode 2 am Ende der Abkopplung der Fremdkühlung, $l_A$ ist die Gesamtlänge der Badelektrode 2, 2'' vom Pfannenherd 24 bis zur Kühlfläche A, $l_N$ ist die Länge des festen Teils der Badelektrode 2 bei Beginn der Abkopplung der Fremdkühlung und $l_E$ die Länge des festen Teils der Badelektrode 2 am Ende der Abkopplung der Fremdkühlung. $t_K$ ist die Temperatur in der Kühlfläche A bei Beginn der Abkopplung, t* die kritische Temperatur, ts die Schmelztemperatur der Badelektrode 2, 2'' und $t_{max}$ die maximale Temperatur in der Herdfläche 24. $t_N$ ist die axiale Temperaturverteilung innerhlab der Badelektrode 2, 2'' bei Beginn der Abkopplung der Fremdkühlung, $t_E$ die Temperaturverteilung innerhalb der Badelektrode 2, 2'' am Ende der Abkopplung der Fremdkühlung.

Wie Fig. 5 zeigt, vermindert sich die Länge des festen Teiles 2 der Badelektrode 2, 2'' infolge des Ansteigens der Temperatur von $t_N$ auf $t_E$, bzw. dem Ansteigen der Temperatur in der Kühlfläche A von $t_K$ auf t* von $l_N$ auf $l_E$.

Ein weiteres Kriterium für die kritische Temperatur t* ist die Temperatur an der elektrischen Anschlussstelle, der beispielsweise bei Überschreiten der kritischen Temperatur t* oxidieren könnte.

Ein weiteres Kriterium für die kritische Temperatur t* ist die Temperatur der Kühlfläche am Ende der Abkopplung, d.h. beim Wiederankopeln der Fremdkühlvorrichtung. Bei einer zu hohen Temperatur können in der Kühlfläche A Schäden durch einen Temperaturschock oder Störungen infolge explosionsartiger Verdampfung des wiedereintretenden Kühlmediums auftreten.

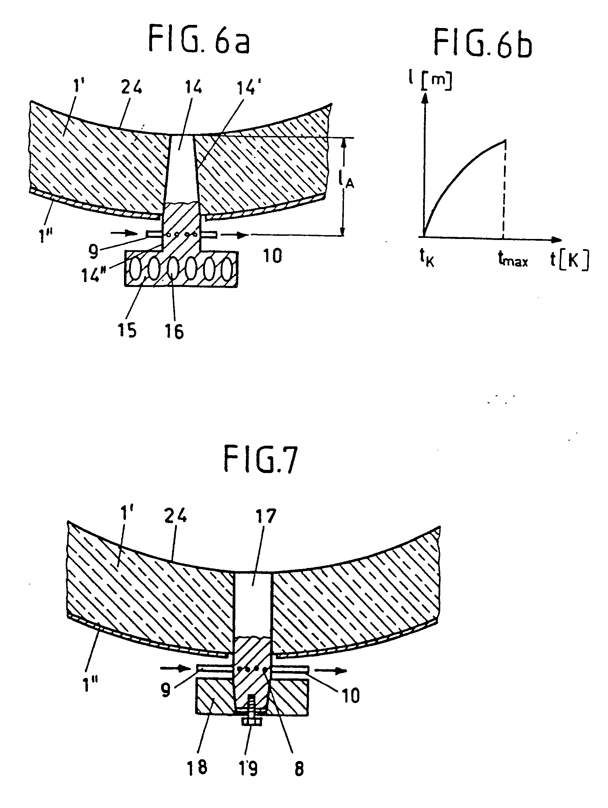

Fig. 6a zeigt ein weiteres erfindungsgemässes Ausführungsbeispiel einer Badelektrode 14, welche einen konischen Teil 14', einen zylindrischen Teil 14'' und einen einstückig mit der Badelektrode 14 verbundenen Kühlkörper 15 aufweist. Im Kühlkörper 15 sind Öffnungen 16 vorgesehen, die beispielsweise mit einem Salz mit einer vorgegebenen Schmelztemperatur ausgefüllt sein können. Bei Überschreiten einer bestimmten Grenztemperatur im Kühlkörper 15 schmilzt das Salz und die dazu benötigte Schmelzwärme wird dem Kühlkörper 15 entzogen und kühlt diesen.

In Fig. 6b, ist die Temperaturverteilung über die Länge $l_A$ der Badelektrode 14 dargestellt. Wegen des geringeren Temperaturgradienten auf der Aussenseite resultiert ein Verzögerungseffekt im Temperaturanstieg innerhalb der Badelektrode 14 auf der Querschnittsverjüngung der Badelektrode in Richtung Pfannenherd.

In Fig. 7 ist eine weitere vorteilhafte erfindungsgemässe Ausgestaltung einer Badelektrode 17 mit einem Kühlkörper 18 dargestellt. Der Kühlkörper 18 ist in dieser beispielsweisen Ausführungsform mittels einer Schraube 19 mit der Badelektrode 17 verschraubt und dadurch leicht anzubringen bzw. wegzunehmen. Der Kühlkörper 18 könnte ebenso gut auch verklemmt oder aufgesteckt werden. Durch diese relativ leichte Auswechselbarkeit des Kühlkörpers 18 kann während der Zeit, in der die Badelektrode 17 ohne Fremdkühlung ist, ein erwärmter Kühlkörper 18 durch einen kalten ersetzt werden.

Hierdurch kann die Verweilzeit der Badelektrode 17 nach Abkopplung von einer Kühlung von aussen bei guter Betriebssicherheit vermehrfacht werden.

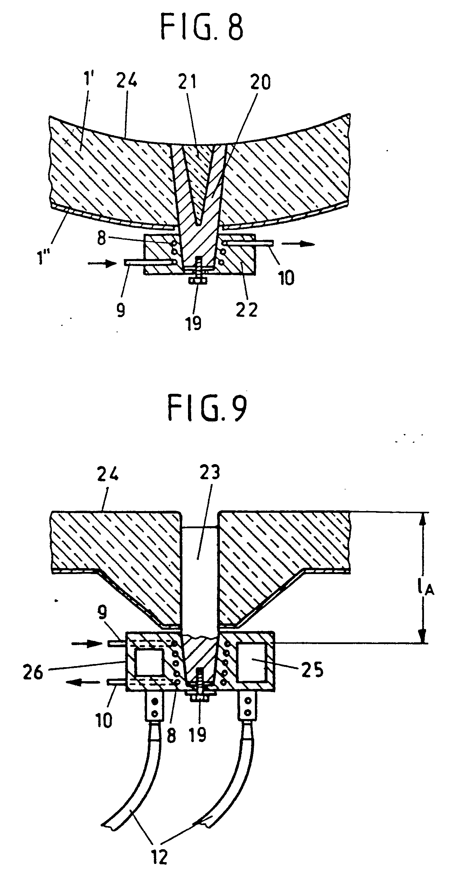

Eine weitere erfindungsgemässe beispielsweise Ausführungsform einer Badelektrode 20 ist in Fig. 8 zu sehen. Hierbei ist der Kühlkörper 22 mit einer Flüssigkeitskühlung 8, 9, 10 versehen und die Badelektrode 20 wird indirekt gekühlt. Der Kühlkörper 22 kann, wenn sich die Pfanne 1 mit der Badelektrode 20 an einer Station wo sich eine Fremdkühlvorrichtung befindet, abgekühlt werden, indem die Vorrichtung 10 an- und wieder abgekoppelt wird. Andererseits kann der Kühlkörper 22 aber auch demontiert und durch einen anderen, ohne Flüssigkeitskühlung, ausgetauscht werden. Die trichterförmige Ausfüllung mit einem feuerfesten Werkstoff 21 innerhalb der Badelektrode 20 dient zur Querschnittsverminderung des elektrisch leitenden Teils der Badelektrode 20 in ihrere Stirnfläche im Pfannenherd 24 gegenüber dem Querschnitt der Badelektrode 20 ausserhalb des Pfannenbodens 1' und hat eine Temperaturverzögerung innerhalb der Elektrode 20 in Richtung Pfannenboden 1' nach dem Abkoppeln von einer Fremdkühlung zur Folge. Dies wirkt sich wiederum günstig auf die Manipulationszeit der Pfanne ohne Fremdkühlung aus. Der elektrische Anschluss an die Badelektrode 20 ist in Fig. 8 aus Gründen besserer Übersicht nicht dargestellt.

Eine weitere erfindungsgemässe Ausgestaltung der Badelektrode 23 zeigt Fig. 9. Hierbei ist ein Kühlkörper 26 mit dem unteren Teil der Badelektrode 23 auswechselbar mittels der Schraube 19 verbunden. Der Kühlkörper 26 kühlt die Badelektrode 23 und dient zugleich aber auch als elektrisches Anschlussstück für die Badelektrode 23. Neben der Flüssigkeitskühlung 8, 9, 10 weist der Kühlkörper 26 Kühlkammern 25 auf, in denen beispielsweise eine geeignete Salzmischung eingegeben werden kann und die, wie bereits vorstehend erwähnt, zur Verstärkung des Kühleffektes beiträgt.

Die erfindungsgemässe Kühlung der Badelektroden 2, 14, 17, 20 der Pfanne 1 eines Pfannenofens bleibt selbstverständlich nicht nur auf eine Lichtbogenbeheizung beschränkt, sondern kann mit gleichem Erfolg ebenso beispielsweise für eine Plasmabeheizung des Pfannenofens eingesetzt werden.

**Patentansprüche**

1. Verfahren zur Erhöhung der Betriebssicherhit eines Pfannenofens (1), mit wenigstens einer Leistungselektrode (3) und mit wenigstens einer Badelektrode (2, 13, 17, 20), welche Badelektrode (2, 13, 17, 20) mindestens während des Aufheizens der Schmelze (4) direkt oder indirekt fremdgekühlt ist, dadurch gekennzeichnet, dass die Badelektrode (2, 13, 17, 20) mindestens während des Transportes der Pfanne (1') von einer Fremdkühlvorrichtung abgekoppelt wird und während dieser Zeitdauer im Bereich des elektrischen Anschlusses (11) und/oder einer Kühlfläche (A, A') unterhalb einer vorgebbaren Temperatur (t*), bei der weder eine wesentliche Beeinträchtigung der elektrischen Kontakte der Badelektrode noch ein Aufschmelzen der Badelektrode eintritt, gehalten wird, und dass das Einhalten dieser Temperaturbedingungen in Abhängigkeit von der Dimensionierung der Badelektrode (2, 13, 17, 20) und/ oder von einem Anbringen von Kühlkörpern (11', 15, 18, 22, 24) erfolgt und/oder dass durch die vorgennanten Massnahmen die Grenzschicht flüssig/fest der Stirnfläche der Badelektrode (2, 14, 17, 20) am Ende der vorgegebenen Zeit der Abkopplung in bezug auf den Abkopplungsbeginn lagestabil gehalten wird.

2. Vorrichtung zur Durchführung des Verfahrens nach Anspruch 1 an einem Pfannenofen mit einer Badelektrode und äusseren Kühlflächen, dadurch gekennzeichnet, dass die Badelektrode (2) eine Verlängerung aufweist um die Erwärmung der Badelektrode selbst und der sie umgebenden Ausbuchtung (13) der Pfanne zu verzögern, und dieser Zeitraum, in welcher in der Kühlfläche (A) der Badelektrode (2) unterhalb der genannten kritischen Temperatur t* bleibt, durch die Beziehung

$$\frac{t^* - t_K}{t_{max} - t_K} = 1 - \left\{ \frac{8}{\pi^2} \left[ 1^{-2} \cdot e^{-\frac{1^2 \cdot \pi^2 \cdot \lambda \cdot T}{4 \cdot c \cdot l_A^2}} + 3^{-2} \cdot e^{-\frac{3^2 \cdot \pi^2 \cdot \lambda \cdot T}{4 \cdot c \cdot l_A^2}} + 5^{-2} \cdot e^{-\frac{5^2 \cdot \pi^2 \cdot \lambda \cdot T}{4 \cdot c \cdot l_A^2}} + \ldots \ldots \right] \right\}$$

festgelegt ist, wobei t* die kritische Temperatur in K in der Kühlfläche (A), $t_{max}$ die Temperatur in K der Badelektrode (2, 2") in der Herdfläche (24), $t_K$ die Temperatur in K in der Kühlfläche (A) bei Beginn der Abkopplung der Fremdkühlung, T die Abkopplungszeit in s, $l_A$ die Länge der Badelektrode (2, 2") von der Herdfläche (24) bis zur Kühlfläche (A) in m, $\lambda$ die Wärmeleitfähigkeit in $W/K \cdot m$ und c die spezifische Wärmekapazität in $W \cdot s/m^2 \cdot K$, ist.

3. Vorrichtung nach Anspruch 2, dadurch gekennzeichnet, dass die Badelektrode (2) über deren Länge $l_A$ von der Herdfläche (24) bis zur Kühlfläche (A') hinaus, einen verlängerten Teil $l_z$ aufewist und dass die Zeit in der die Kühlfläche (A') der Badelektrode (2, 2'') unterhalb der kritischen Temperatur t* bleibt, durch die Formel:

$$\frac{t^* - t_K}{t_{max} - t_K} = 1 - \left\{ \frac{8}{\pi^2} \cdot \frac{l_A + l_z}{l_A} \cdot \left[ \sin^2 \frac{\pi \cdot l_A}{2(l_A + l_z)} \cdot 1^{-2} \cdot e^{-\frac{1^2 \cdot \pi^2 \cdot \lambda \cdot T}{4c(l_A + l_z)^2}} \right. \right.$$

$$\left. + \sin^2 \frac{3 \cdot \pi \cdot l_A}{2(l_a + l_z)} \cdot 3^{-2} \cdot e^{-\frac{3^2 \cdot \pi^2 \cdot \lambda \cdot T}{4c(l_A + l_z)^2}} + \sin^2 \frac{5 \cdot \pi \cdot l_A}{2(l_A + l_z)} \cdot \right.$$

$$\left. \left. 5^{-2} \cdot e^{-\frac{5^2 \cdot \pi^2 \cdot \lambda \cdot T}{4c(l_A + l_z)^2}} + \ldots \ldots \right] \right\}$$

festgelegt ist, wobei t* die kritische Temperatur in K in der Kühlfläche (A'), $t_{max}$ die Temperatur in die Temperatur in K in der Kühlfläche (A') bei Beginn der Abkopplung der Fremdkühlung, T die Abkopplungszeit in s, $l_A$ die Länge der Badelektrode (2, 2'') von der Herdfläche (24) bis zur Kühlfläche (A') in m, $l_z$ die Verlängerung der Badelektrode (2, 2'') über die Kühlfläche (A') hinaus in m, λ die Wärmeleitfähigkeit in W/K · m und c die spezifische Wärmekapazität in W · s/m² · K, ist.

4. Vorrichtung nach Anspruch 2, dadurch gekennzeichnet, dass der Kühlkörper (15) durch den äusseren Teil der Badelektrode (14) gebildet ist.

5. Vorrichtung nach Anspruch 2, dadurch gekennzeichnet, dass der Kühlkörper (18, 22, 24) mit dem äusseren Teil der Badelektrode (17, 20, 23) auswechselbar verbunden ist und/oder dass der Kühlkörper (22) fremdgekühlt ist.

6. Vorrichtung nach Anspruch 2, 4 oder 5, dadurch gekennzeichnet, dass der Kühlkörper (11', 24) ein elektrisches Anschlussstück bildet.

7. Vorrichtung nach Anspruch 2, 4, 5 oder 6, dadurch gekennzeichnet, dass der Kühlkörper (24) wenigstens eine Kühlkammer (16, 26) für bei einer vorbestimmten Grenztemperatur schmelzendes Material, beispielsweise Salz, aufweist.

8. Vorrichtung nach Anspruch 2, 4, 5, 6 oder 7 dadurch gekennzeichnet, dass der Kühlkörper (11', 15, 18, 22, 24) aus einem Werkstoff mit einer relativ hohen Wärmeleitfähigkeit, beispielsweise aus Kupfer oder Aluminium, besteht.

9. Vorrichtung nach einem der Ansprüche 2 bis 8, dadurch gekennzeichnet, dass der elektrisch leitende Querschnitt der Badelektrode (2, 2'') von ihrer der Schmelze (4) zugekehrten Stirnfläche bis zum Pfannenboden (1''), zunimmt und/oder der Durchmesser der Badelektrode (20) von der Herdfläche (24) bis zum Pfannenboden (1'') abnimmt.

**Revendications**

1. Procédé pour accroître la sécurité d'exploitation d'une poche-four (1), comportant au moins une électrode de puissance (3) et au moins une électrode de bain (2, 13, 17, 20), cette électrode de bain (2, 13, 17, 20) étant soumise à un refroidissement forcé direct ou indirect, au moins pendant la mise en température de la matière en fusion (4), caractérisé en ce que l'électrode de bain (2, 13, 17, 20) est désaccouplée d'un dispositif de refroidissement forcé au moins pendant le transport de la poche (1') et est maintenue, pendant cette période, dans la zone de la connexion électrique (11) et/ou d'une face de refroidissement (A, A'), en dessous d'une température prédéfinie (t*), pour laquelle il n'y a pas d'influence défavorable sensible des contacts électriques de l'électrode de bain ni de fusion de cette dernière, et que le maintien de ces conditions de température s'effectue en fonction des dimensions de l'électrode de bain (2, 13, 17, 20) et/ou d'un montage de dissipateurs de chaleur (11', 15, 18, 22, 24) et/ou que, grâce aux mesures précitées, l'interface liquide/solide de la face d'about de l'électrode de bain (2, 14, 17, 20) est maintenue stable en position à la fin du temps prédéfini du désaccouplement avec référence au début de ce désaccouplement.

2. Dispositif pour l'exécution du procédé suivant la revendication 1 dans une poche-four comportant une électrode de bain et des faces de refroidissement extérieures, caractérisé en ce que l'électrode de bain (2) présente un prolongement pour retarder l'échauffement de l'électrode de bain elle-même et du bossage de poche (13) qui l'entoure, et cette période au cours de laquelle, au niveau de la face de refroidissement (A), l'électrode de bain (2) reste en dessous de ladite température critique t* est établie par la relation suivante:

6

$$\frac{t^* - t_K}{t_{max} - t_K} = 1 - \left\{ \frac{8}{\pi^2} \left[ 1^{-2} \cdot e^{-\frac{1^2 \cdot \pi^2 \cdot \lambda \cdot T}{4 \cdot c \cdot l_A^2}} + 3^{-2} \cdot e^{-\frac{3^2 \cdot \pi^2 \cdot \lambda \cdot T}{4 \cdot c \cdot l_A^2}} + 5^{-2} \cdot e^{-\frac{5^2 \cdot \pi^2 \cdot \lambda \cdot T}{4 \cdot c \cdot l_A^2}} + \dots \dots \right] \right\}$$

où t* est la température critique en K au niveau de la face de refroidissement (A), $t_{max}$ est la température en K de l'électrode de bain (2, 2″) au niveau de la surface de sole (24), $t_K$ est la température en K au niveau de la face de refroidissement (A) au début du désaccouplement du refroidissement forcé, T est le temps de désaccouplement en s, $l_A$ est la longueur de l'électrode de bain (2, 2″) depuis la surface de sole (24) jusqu'à la face de refroidissement (A) en m, $\lambda$ est la conductibilité thermique en W/K · m et c est la capacité thermique spécifique en W · s/m² · K.

3. Dispositif suivant la revendication 2, caractérisé en ce que l'électrode de bain (2) présente une partie de prolongement $l_z$ qui s'étend au-delà de sa longueur $l_A$ allant de la surface de sole (24) jusqu'à la face de refroidissement (A′), et que le temps pendant lequel la face de refroidissement (A′) de l'électrode de bain (2, 2″) reste en dessous de la température critique t* est déterminé par la formule suivante:

$$\frac{t^* - t_K}{t_{max} - t_K} = 1 - \left\{ \frac{8}{\pi^2} \cdot \frac{l_A + l_z}{l_A} \cdot \left[ \sin^2 \frac{\pi \cdot l_A}{2(l_A + l_z)} \cdot 1^{-2} \cdot e^{-\frac{1^2 \cdot \pi^2 \cdot \lambda \cdot T}{4c(l_A + l_z)^2}} \right. \right.$$
$$+ \sin^2 \frac{3 \cdot \pi \cdot l_A}{2(l_a + l_z)} \cdot 3^{-2} \cdot e^{-\frac{3^2 \cdot \pi^2 \cdot \lambda \cdot T}{4c(l_A + l_z)^2}} + \sin^2 \frac{5 \cdot \pi \cdot l_A}{2(l_A + l_z)} \cdot$$
$$\left. \left. 5^{-2} \cdot e^{-\frac{5^2 \cdot \pi^2 \cdot \lambda \cdot T}{4c(l_A + l_z)^2}} + \dots \dots \right] \right\}$$

où t* est la température critique en K au niveau de la face de refroidissement (A′), $t_{max}$ est la température en K au niveau de la face de refroidissement (A′) au début du désaccouplement du refroidissement forcé, T est le temps de désaccouplement en s, $l_A$ est la longueur de l'électrode de bain (2, 2″) depuis la surface de sole (24) jusqu'à la face de refroidissement (A′) n m, $l_z$ est le prolongement de l'électrode de bain (2, 2″) au-delà de la face de refroidissement (A′) en m, $\lambda$ est la conductibilité thermique an W/K · m et c est la capacité thermique spécifique en W · s/m² · K.

4. Dispositif suivant la revendication 2, caractérisé en ce que le dissipateur thermique (15) est formé par la partie extérieure de l'électrode de bain (14).

5. Dispositif suivant la revendication 2, caractérisé en ce que le dissipateur de chaleur (18, 22, 24) est relié de manière remplaçable à la partie extérieure de l'électrode de bain (17, 20, 23) et/ou le dissipateur de chaleur (22) est soumis à un refroidissement forcé.

6. Dispositif suivant la revendication 2, 4 ou 5, caractérisé en ce que le dissipateur de chaleur (11′, 24) forme une pièce de connexion électrique.

7. Dispositif suivant la revendication 2, 4, 5 ou 6, caractérisé en ce que le dissipateur de chaleur (24) comporte au moins une chambre de refroidissement (16, 26) pour une matière fondant à une température limite prédéterminée, par exemple du sel.

8. Dispositif suivant la revendication 2, 4, 5, 6 ou 7, caractérisé en ce que le dissipateur de chaleur (11′, 15, 18, 22, 24) est fait d'une matière présentant une conductibilité thermique relativement élevée, par exemple du cuivre ou de l'aluminium.

9. Dispositif suivant l'une quelconque des revendications 2 à 8, caractérisé en ce que la section transversale conductrice électrique de l'électrode de bain (2, 2″) augmente depuis sa face d'about tournée vers la matière en fusion (4) jusqu'au fond (1″) de la poche et/ou le diamètre de l'électrode de bain (20) diminue depuis la surface de sole (24) jusqu'au fond (1″) de la poche.

**Claims**

1. Method for increasing the operating safety of a pan furnace (1) at least one heavy-duty electrode (3) and having at least one bath electrode (2, 13 (sic), 17, 20), which bath electrode (2, 13 (sic), 17, 20) is directly

EP 0 167 037 B1

or indirectly separately cooled at least during the heating-up of the melt (4), characterized in that the bath electrode (2, 13 (sic), 17, 20) is decoupled from a separate cooling device at least during the transportation of the pan (1' (sic)) and is held during this period of time below a specifiable temperature (t*), at which neither a substantial impairment of the electrical contacts of the bath electrode nor a fusion of the bath electrode occurs, in the region of the electrical contact (11) and/or of a cooling surface (A, A'), in that these temperature conditions are maintained as a function of the dimensioning of the bath electrode (2, 13 (sic), 17, 20) and/or of a fitting of heat sinks (11', 15, 18, 22, 24 (sic)), and/or in that, as a result of the above-mentioned measures, the liquid/solid boundary layer of the end face of the bath electrode (2, 14, 17, 20) is kept positionally stable at the end of the specified decoupling time in relation to the start of decoupling.

2. Device for carrying out the method according to Claim 1 on a pan furnace having a bath electrode and external cooling surfaces, characterized in that the bath electrode (2) has an extension in order to delay the heating of the bath electrode itself and the bulge (13) of the pan surrounding it, and this period of time, in which ... (lacuna) remains below the critical temperature t* mentioned in the cooling surface (A) of the bath electrode (2), is determined by the relationship

$$\frac{t^* - t_K}{t_{max} - t_K} = 1 - \left\{ \frac{8}{\pi^2} \left[ 1^{-2} \cdot e^{-\frac{1^2 \cdot \pi^2 \cdot \lambda \cdot T}{4 \cdot c \cdot 1_A^2}} + 3^{-2} \cdot e^{-\frac{3^2 \cdot \pi^2 \cdot \lambda \cdot T}{4 \cdot c \cdot 1_A^2}} + 5^{-2} \cdot e^{-\frac{5^2 \cdot \pi^2 \cdot \lambda \cdot T}{4 \cdot c \cdot 1_A^2}} + \ldots \right] \right\}$$

where t* is the critical temperature in K in the cooling surface (A), $t_{max}$ is the temperature in K of the bath electrode (2, 2″) in the hearth surface (24), $t_K$ is the temperature in K in the cooling surface (A) at the start of the decoupling of the separate cooling system, T is the decoupling time in s, $1_A$ is the length of the bath electrode (2, 2″) from the hearth surface (24) to the cooling surface (A) in m, k is the thermal conductivity in W/K · m and c is the specific heat capacity in W · s/m² · K.

3. Device according to Claim 2, characterized in that the bath electrode (2) has an extended part $1_z$ beyond its length from the hearth surface (24) to the cooling surface (A'), and in that the time in which the cooling surface (A') of the bath electrode (2, 2″) remains below the critical temperature t* is determined by the formula:

$$\frac{t^* - t_K}{t_{max} - t_K} = 1 - \left\{ \frac{8}{\pi^2} \cdot \frac{1_A + 1_z}{1_A} \cdot \left[ \sin^2 \frac{\pi \cdot 1_A}{2(1_A + 1_z)} \cdot 1^{-2} \cdot e^{-\frac{1^2 \cdot \pi^2 \cdot \lambda \cdot T}{4c(1_A + 1_z)^2}} \right. \right.$$
$$+ \sin^2 \frac{3 \cdot \pi \cdot 1_A}{2(1_a + 1_z)} \cdot 3^{-2} \cdot e^{-\frac{3^2 \cdot \pi^2 \cdot \lambda \cdot T}{4c(1_A + 1_z)^2}} + \sin^2 \frac{5 \cdot \pi \cdot 1_A}{2(1_A + 1_z)} \cdot$$
$$\left. \left. 5^{-2} \cdot e^{-\frac{5^2 \cdot \pi^2 \cdot \lambda \cdot T}{4c(1_A + 1_z)^2}} + \ldots \right] \right\}$$

where t* is the critical temperature in K in the cooling surface (A'), $t_{max}$ is the temperature in the temperature (sic) in K in the cooling surface (A') at the start of the decoupling of the separate cooling system, T is the decoupling time in s, $1_A$ is the length of the bath electrode (2, 2″) from the hearth surface (24) to the cooling surface (A') in m, $1_z$ is the extension of the bath electrode (2, 2″) beyond the cooling surface (A') in m, k is the thermal conductivity in W/K · m and c is the specific heat capacity in W · s/m² · K.

4. Device according to Claim 2, characterized in that the heat sink (15) is formed by the outer part of the bath electrode (14).

5. Device according to Claim 2, characterized in that the heat sink (18, 22, 24 (sic)) is replaceably connected to the outer part of the bath electrode (17, 20, 23), and/or in that the heat sink (22) is separately cooled.

6. Device according to Claims 2, 4 or 5, characterized in that the heat sink (11', 24 (sic)) forms an electrical connecting piece.

8

7. Device according to Claims 2, 4, 5 or 6, characterized in that the heat sink (24 (sic)) has at least one cooling chamber (16, 26 (sic)) for a material, for example salt, which melts at a predetermined limit temperature.

8. Device according to Claims 2, 4, 5, 6 or 7, characterized in that the heat sink (11', 15, 18, 22, 24 (sic)) is composed of a material having a relatively high thermal conductivity, for example of copper or aluminium.

9. Device according to one of Claims 2 to 8, characterized in that the electrically conducting cross-section of the bath electrode (2, 2″) increases from its end face facing the melt (4) to the pan bottom (1″) and/or the diameter of the bath electrode (20) decreases from the hearth surface (24) to the pan bottom (1″).

FIG.1

FIG.2a

FIG.2b

FIG.3a

FIG.3b

FIG. 4

FIG. 5

# FIG. 6a

# FIG. 6b

# FIG. 7

# FIG. 8

# FIG. 9